**Europäisches Patentamt**

**European Patent Office**

**Office européen des brevets**

(11) Numéro de publication: **0 128 786**
**B1**

## FASCICULE DE BREVET EUROPEEN

(45) Date de publication du fascicule du brevet: **26.10.88**

(51) Int. Cl.⁴: **B 60 R 25/02**

(21) Numéro de dépôt: **84400887.0**

(22) Date de dépôt: **02.05.84**

(54) Système antivol pour véhicule automobile.

(30) Priorité: **02.05.83 FR 8307228**

(43) Date de publication de la demande:
**19.12.84 Bulletin 84/51**

(45) Mention de la délivrance du brevet:
**26.10.88 Bulletin 88/43**

(84) Etats contractants désignés:
**AT BE CH DE FR GB IT LI LU NL SE**

(56) Documents cités:
**FR-A-2 406 545**
**GB-A- 164 541**
**GB-A-1 294 020**
**US-A-2 552 936**

(73) Titulaire: **Martins, Manuel**
**82 Boulevard Max Dormoy**
**F-93190 Livry Gargan (FR)**

(72) Inventeur: **Martins, Manuel**
**82 Boulevard Max Dormoy**
**F-93190 Livry Gargan (FR)**

(74) Mandataire: **Burtin, Jean-François**
**5 Bis, rue Parmentier**
**F-92200 Neuilly S/Seine (FR)**

Courier Press, Leamington Spa, England.

# Description

La présente invention concerne un dispositif antivol adaptable à tous les véhicules automobiles actuellement en circulation.

Il ne s'agit pas d'un systéme d'alarme comme il en existe actuellement et qui se révèlent souvent hélàs inefficaces en présence de cambrioleurs experts.

Le dipositif selon l'invention permet non pas de mettre en fuite les gens mal intentionnés, mais plutôt de les décourager. Il s'agit en effet pour chaque propriétaire de véhicule automobile, grâce à un moyeu spécial, d'ôter le volant de sa voiture lors d'un stationnement, d'où l'impossibilité de déplacer le véhicule.

La référence ALONSO (Brevet Français FR—A—2.406.545) décrit déja un dispositif antivol permettant le desaccouplement du volant ou sa re-solidarisation sur l'arbre de direction d'un véhicule automobile.

Ce dispositif comporte une piéce intermédiaire de forme générale tronc-conique sur laquelle se profilent des filets hélicoidaux constituants des filetages discontious à grands pas ainsi qu' un orifice destiné à recevoir un téton tranersant la partie centrale du volant. Ce dispositif, en outre, est traversé dans le sens vertical par l'arbre de direction qui est pourvu àas partie supérieure d'un filetage destiné à recevoir un ecrou qui compléte le dispositif de solidarisation et qui assujetit le volant sur la colonne de direction.

Au contraire le dispositif selon l'invention comme caractérisé dans le revendication 1 est différent à la fois dans sa nature et dans sa fonction. Le dispositif selon l'invention se différencie d'une part par le fait que le montage du dispositif s'effectue par l'intermediaire d'un systéme de tétons qui coopérent avec les orifice d'une collerette et d'autre part en ce que l'axe de la colonne de direction ne comporte pas de filetage. L'ecrou de solidarisation du type vis à téte plate vient s'engager dans le pas de vis porté par le moyeu spécial et serrer le bord du volant sur la piéce intermédiaire.

Le dispositif comporte trois parties: une bride, une collerette et un ecrou de serrage de l'ensemble.

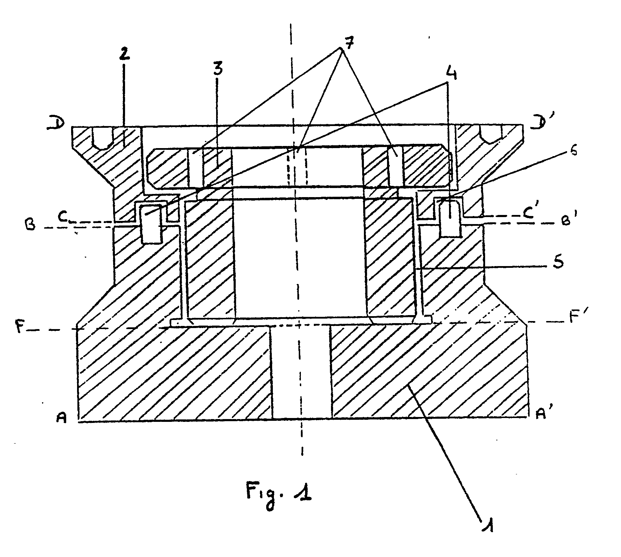

La figure 1 représente l'ensemble du dispositif.

La bride (1) est montée trés serré sur l'arble de colonne de direction et demeure fixe. De ce fait, la dépose de la bride (1) nécessite le concours d'un professionel en atelier. Cette bride (1) est munie d'une combinaison comportant au moins quatre tétons (4). La longueur et l'emplacement des tétons consistuent la combinaison codifiée et spécifique à chaque bride accompagnée de sa collerette (2). La combinaison des tétons de guidage est propre à chaque moyeu de telle sorte qu'il ne peut y avoir de permutation entre deux brides et deux collerettes. La bride (1) dispose d'un contracteur de klaxon. Elle présente en son centre un orifice fileté (5) pour recevoir l'écrou de serrage (3).

La collerette (2) est munie d'au moins quatre orifices (6) destinés à recevoir les tétons (4) et constitue un dispositif de solidarisation.

Tout volant actuellement en vente et notamment ceux que l'on peut se procurer dans les magasins spécialisés pourra être fixé sur le collerette (2). La collerette (2) est également munie d'un contacteur de klaxon qui entrera en contact avec celui de la bride (1). Il est possible également de fixer sur le volant tout autre dispositif déclairement. L'écrou de serrage (3) fileté est destiné à fixer l'ensemble du dispositif, c'est-à-dire la collerette (2) sur la bride (1).

Sur sa surface supérieure l'écrou de serrage dispose de trois orifices (7) destinés à recevoir, pour faciliter l'opération de pose et de dépose, une clef spéciale. L'écrou de serrage (3) ne peut être mis en place que si au préalable les tétons (4) ont tous été placés dans leur logement. L'écrou de serrage (3) peut comporter en outre un dispositif de sécurité interdisant le démarrage du moteur.

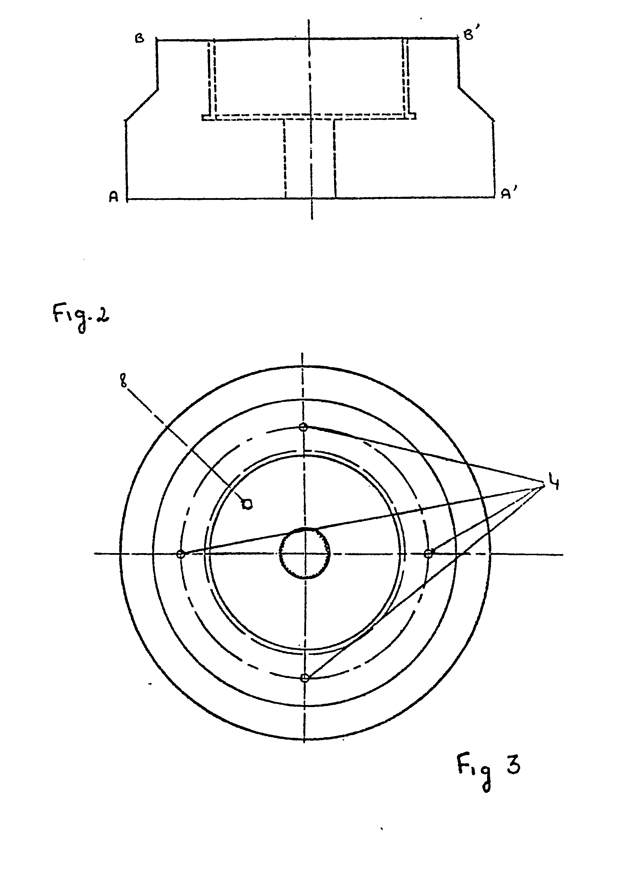

La figure 2 représente en détail et en vue de face la bride.

La figure 3 représente une vue de dessus de la bride. On peut voir les tétons de guidage (4) et le contacteur de "klaxon" (8).

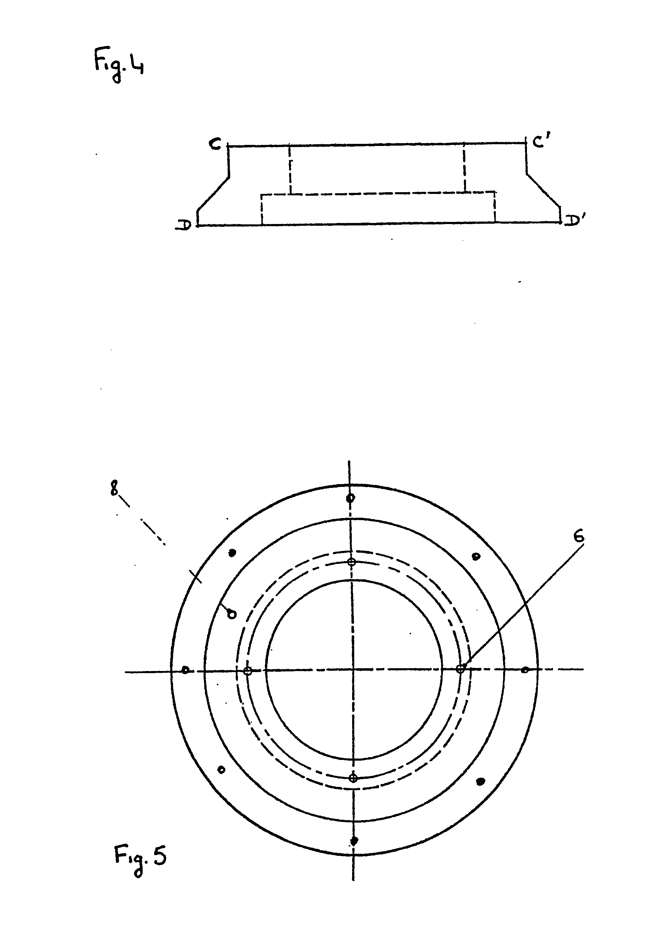

La figure 4 représente une vue de face de la collerette.

La figure 5 représente une vue de dessus de la collerette.

On peut voir les orifices (6) dans lesquels viendront se fixer les tétons de la bride. On remarque également le contacteur de "klaxon" (8).

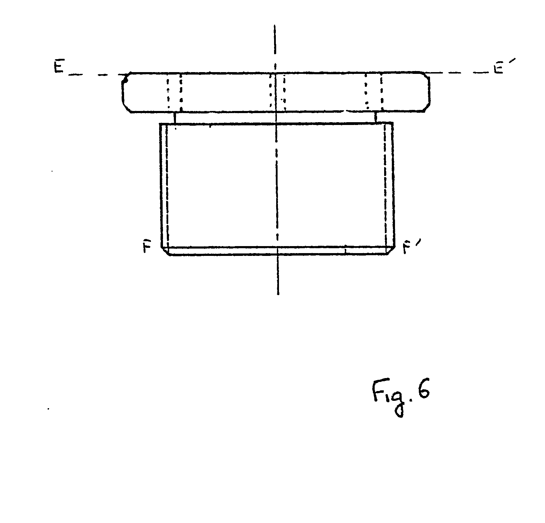

La figure 6 représente en détail l'écrou de serrage.

· Le dispositif selon l'invention premet donc, lors de chaque stationnement, d'ôter rapidement et facilement à l'aide de l'écrou de serrage (3) le volant de son véhicule. Une fois le volant ôté, il est donc pratiquement impossible "d'emprunter" le véhicule et d'autre part il ne peut y avoir fracturation d'un dispositif antivol bloquant la direction.

Ce dispositif peut étre utilisé sur tout véhicule automobile.

# Revendications

1. Dispositif anti-vol perfectionné comportant un ensemble intermédiaire entre le volant du véhicule automobile à protéger et son arbre de direction, celui-ci étant relié en permanence à l'arbre de direction, le dispositif est constitué par un moyeu spécial formé de trois parties à savoir:
— une bride (1) montée serrée sur l'arbre de la colonne de direction;
— une collerette (2) sur laquelle est monté le volant; et
— une ecrou de serrage (3) assurant la solidarisation de l'ensemble, caractérisé en ce que la bride (1) est pourvue de tétons de guidage (4) disposés selon une combinaison spécifique à chaque moyeu, qui viennent se loger dans les orifices (6) de la collerette (2) disposés symétri-

quement par rapport aux tétons de guidage (4) destinés à les recevoir.

2. Dispositif selon de revendication 1°) caractérisé en ce que la bride (1) constitue une partie du moyeu et qu'elle est filetée en son centre (5) pour recevoir un ecrou de serrage (3).

3. Dispositif selon la revendication 1°) caractérisé en ce que la collerette (2) constitue une partie du moyeu et qu'elle dispose d'au moins quatre orifices (6) destinés à recevoir les tétons de guidage (4) de la bride (1).

4. Dispositif selon la revendication 1°) caractérisé en ce que le dispositif de solidarisation (3) constitue une partie du moyeu.

## Patentansprüche

1. Verbesserte Diebstahlsicherung mit einem Zwischenstück zwischen dem Lenkrad des zu schützenden Kraftfahrzeugs und seiner Lenkspindel, welches Zwischenstücke ständig mit der Lenkspindel verbunden ist und aus einer Spezialnabe besteht, die sich aus drei Teilen zusammensetzt, nämlich
— einem auf die Spindel der Lenksäule aufgepreßten Flansch (1),
— einem Kragen (2), auf dem das Lenkrad augebracht ist, und
— einer Druckmutter (3) für die formschlüssige Verbindung der Gesamtanordnung, dadurch gekennzeichnet, daß der Flansch (1) mit Führungszapfen (4) versehen ist, die in einer für jede Nabe spezifischen Kombination angeordnet sind und die in Öffnungen (6) des Kragens (2) eingreifen, welche, symmetrisch zu den Zapfen (4) liegen, die sie aufnehmen sollen.

2. Diebstahlsicherung nach Anspruch 1, dadurch gekennzeichnet, daß der Flansch (1) einen Teil der Nabe bildet und in seiner Mitte (5) ein Gewinde zur Aufnahme einer Druckmutter (3) besitzt.

3. Diebstahlsicherung nach Anspruch 1, dadurch gekennzeichnet, daß der Kragen (2) einen Teil der Nabe bildet und mindestens vier Öffnungen (6) zur Aufnahme der Führungszapfen (4) des Flanschs (1) besitzt.

4. Diebstahlsicherung nach Anspruch 1, dadurch gekennzeichnet, daß die Vorrichtung (3) zum formschlüssigen Verbinden einen Teil der Nabe bildet.

## Claims

1. Improved anti-theft system including an intermediary set between the wheel of a motor vehicle to be protected and the steering column, the latter being permanently connected to the steering column, this system being formed with a special nave made of three different parts i.e.:
— a strap (1) tightly mounted on the shaft of the steering column.
— a collarette (2) on which the wheel is mounted.
— and a hold-down unit (3) insuring the solidarization of the whole set characterized in that the strap (1) is provided with protuberances for guiding (4) placed in a specific manner to each strap which comes to be fixed in the orifices (6) of the said collarette symetrically disposed in relation to the protuberances for guiding, intended to receive them.

2. System according to claim 1 characterized in that the strap (1) is a part of the nave and is threaded in its middle (5) to receive a hold-down unit (3).

3. System according to claim characterized in that the collarette (2) is a part of the nave and it includes at least four orifices (6) intended to receive the protuberances for guiding (4) of the strap (1).

4. System according to claim 1 characterized in that the solidarizing means is a part of the nave.

Fig. 1

Fig.2

Fig 3

Fig. 4

Fig. 5

Fig. 6